(19) Europäisches Patentamt
European Patent Office
Office européen des brevets

(11) Veröffentlichungsnummer : **0 384 247 B1**

# (12) EUROPÄISCHE PATENTSCHRIFT

(45) Veröffentlichungstag der Patentschrift :
**04.08.93 Patentblatt 93/31**

(51) Int. Cl.$^5$ : **C08G 18/38,** C08G 73/10, C08G 73/06

(21) Anmeldenummer : **90102639.3**

(22) Anmeldetag : **10.02.90**

## (54) Verfahren zur Herstellung von Amidgruppen und/oder Imidgruppen aufweisenden Polyhydantoinen.

(30) Priorität : **24.02.89 DE 3905791**

(43) Veröffentlichungstag der Anmeldung :
**29.08.90 Patentblatt 90/35**

(45) Bekanntmachung des Hinweises auf die Patenterteilung :
**04.08.93 Patentblatt 93/31**

(84) Benannte Vertragsstaaten :
**AT DE FR GB IT**

(56) Entgegenhaltungen :
**EP-A- 0 012 379**
**EP-A- 0 012 380**
**DE-A- 1 795 804**
**DE-A- 2 017 207**
**US-A- 4 108 843**

(73) Patentinhaber : **BAYER AG**
**W-5090 Leverkusen 1 Bayerwerk (DE)**

(72) Erfinder : **Jonas, Friedrich, Dr.**
**Krugenofen 15**
**W-5100 Aachen (DE)**
Erfinder : **Merten, Rudolf, Dr.**
**Berta-von-Suttner-Strasse 55**
**W-5090 Leverkusen 1 (DE)**

EP 0 384 247 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Herstellung von Polyhydantoinen auf der Basis von Umsetzungsprodukten von polyfunktionellen $\alpha$-Aminocarbonsäurederivaten und organischen Polyisocyanaten, bei welchem die weiter unten beschriebenen Carbonsäurederivate mitverwendet und die ebenfalls weiter unten beschriebenen kondensierten aromatischen Kohlenwasserstoffe als Müssige Reaktionsmedien eingesetzt werden.

Verfahren zur Herstellung von Polyhydantoin-Kunststoffen durch Umsetzung von Glycinesterderivaten und Polyisocyanaten sind bereits bekannt (z-B- US 3.397.253).

Diese Verfahrensweise hat nachfolgend noch zahlreiche Varianten erfahren, bei denen diese Hydantoingruppen enthaltenden Polymeren durch Zugabe oder Einbau von weiteren funktionellen Gruppen wie Amid-, Imid- oder Estergruppen variiert werden. Dabei werden eine Vielzahl von unterschiedlichen Lösungsmitteln empfohlen. Hydantoingruppen enthaltende Polymere mit dem besten Eigenschaftsniveau erhält man jedoch bisher nur, wenn phenolische Lösungsmittel, wie Phenol, Kresole oder Xylenole allein oder in Abmischungen eingesetzt werden. Die DE-OS 2 017 207 beschreibt die Isolierung von Polyhydantoin-Kunststoffen in fester Form aus ihren Lösungen in derartigen phenolischen Lösungsmitteln.

Bei der Verwendung der phenolischen Lösungsmittel ergeben sich jedoch Umweltbelastungen, so daß bei einer Applikation, beispielsweise als Drahtlack, aus solchen phenolischen Lösungsmitteln heraus aufwendige Rückgewinnungsanlagen zur quantitativen Wiedergewinnung dieser Lösungsmittel bzw. ihrer quantitativen Entfernung aus Abwasser und Abluft erforderlich sind.

In DE-OS 28 54 383 wird ein Verfahren zur Herstellung von modifizierten Hydantoinen in Lactonen als dem Reaktionsmedium beschrieben. Jedoch weisen die erhaltenen Polymere, durch Nebenreaktionen verursacht, zum einen eine starke Gelbfärbung und zum anderen eine geringe Molmasse auf, was sich in der geringen relativen Viskosität äußert.

Bei jeder Verwendung von Polyhydantoinen als Chemiewerkstoffe muß das phenolische Reaktionsmedium durch aufwendige Fällungs- und/oder Extraktionsverfahren quantitativ entfernt werden.

Überraschenderweise wurde nun gefunden, daß sich Polyhydantoine, die Amid- und/oder Imidgruppen aufweisen, vorteilhaft herstellen lassen, wenn man in kondensierten aromatischen Kohlenwasserstoffen als dem flüssigen organischen Reaktionsmedium arbeitet, wobei klare hochmolekulare Polymere entstehen, die während der Reaktion ausfallen und durch einfache mechanische Trenn- und Nachwaschverfahren vom Reaktionsmedium befreit werden können.

Es wurde ein Verfahren zur Herstellung von Amidgruppen und/oder Imidgruppen aufweisenden Polyhydantoinen auf der Basis von Umsetzungsprodukten von polyfunktionellen $\alpha$-Aminocarbonsäurederivaten und organischen Polyiso(thio)cyanaten in flüssigen organischen Reaktionsmedien gefunden, das dadurch gekennzeichnet ist, daß man die Umsetzung unter Mitverwendung von Carbonsäurederivaten der Formel

$$X\text{-}R^6{<}^{Y}_{Z} \qquad (I),$$

in der

| | |
|---|---|
| X | eine Carboxylgruppe oder eine cyclische Anhydridgruppe aus zwei benachbarten Carboxylgruppen bedeutet, |
| Y und Z | je eine Carboxylgruppe oder gemeinsam eine cyclische Anhydridgruppe aus zwei benachbarten Carboxylgruppen bedeuten und weiterhin |
| Z | zusätzlich Wasserstoff bedeuten kann, wenn X und Y gemeinsam kein cyclisches Anhydrid bilden können, und |
| $R^6$ | für den Rest eines geradkettigen oder verzweigten aliphatischen $C_2$-$C_{10}$-Kohlenwasserstoffs, eines cycloaliphatischen $C_5$-$C_{10}$-Kohlenwasserstoffs, eines aromatischen $C_6$-$C_{14}$-Kohlenwasserstoffs oder den Rest von Verbindungen der Struktur |

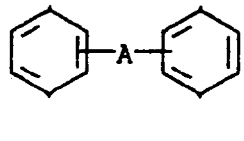,

in der

| | |
|---|---|
| X bzw. Y und Z | an je einen Benzolkern gebunden sind und |

A eine der folgenden Gruppen

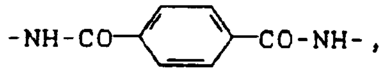 , 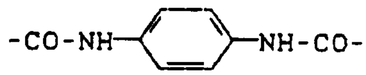 ,

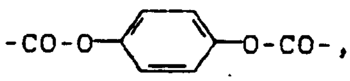 , 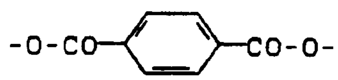 ,

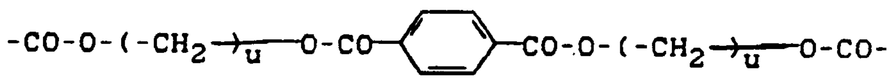

mit u = 2-6,

$$-CO-O-(-CH_2-)_u-O-CO-$$

mit u = 2-6, -O-, -S-, $SO_2$-, -CO-, -N=N-, $-CH_2-$ oder $-C(CH_3)_2-$, bedeutet, und in einem kondensierten aromatischen Kohlenwasserstoff der Formel

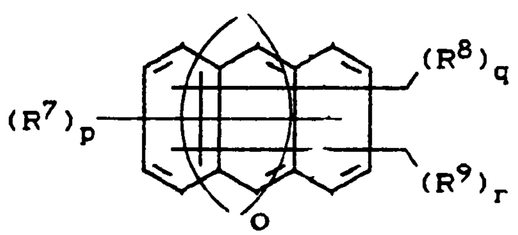 (II),

in der

R⁷, R⁸ und R⁹ unabhängig voneinander geradkettiges oder verzweigtes $C_1$-$C_8$-Alkyl oder $C_1$-$C_8$-Alkoxy, $C_5$-$C_8$-Cycloalkyl, Phenyl, Fluor, Chlor, Brom oder Nitro bedeuten,

o den Wert null oder eins annehmen kann, wobei der Wert eins eine lineare oder angulare Verknüpfung der aromatischen Kerne beinhaltet, und

p, q und r unabhängig voneinander die Werte null, eins, zwei oder drei annehmen, wobei jedoch ihre Summe auf maximal sechs begrenzt ist,

bei 0 bis 500°C durchführt.

Das erfindungsgemäße Verfahren wird in bevorzugter Weise unter Mitverwendung eines Carbonsäurederivats der Formel

$$X-R^{16}<^{Y}_{Z} \qquad (III)$$

durchgeführt, in der

X, Y und Z die obige Bedeutung haben und

$R^{16}$ für den Rest eines aromatischen $C_6$-$C_{10}$-Kohlenwasserstoffs oder den Rest von Verbindungen der Struktur

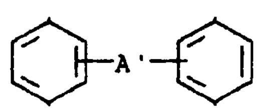 ,

in der

X bzw. Y und Z an je einen Benzolkern gebunden sind und

A' eine der folgenden Gruppen bedeutet:

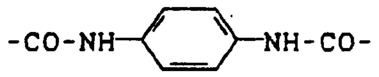 , 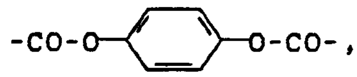

$$-CO-O-(-CH_2-)_u-O-CO-$$

mit u = 2-6, -CO-, $-C(CH_3)_2-$.

In besonders bevorzugter Weise werden als Carbonsäurederivate solche der oben beschriebenen Art mitverwendet, in denen anstelle von X der Rest X' tritt, der eine Carboxylgruppe oder eine cyclische Anhydridgruppe aus zwei benachbarten Carboxylgruppen bedeutet, und anstelle von Y und Z die Reste Y' und Z' treten, die gemeinsam eine cyclische Anhydridgruppe aus zwei benachbarten Carboxylgruppen bedeuten.

In ganz besonders bevorzugter Weise werden Carbonsäurederivate mitverwendet, die folgende Strukturen aufweisen:

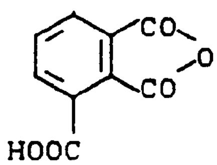 , 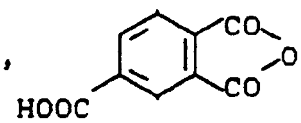 , 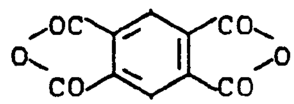 ,

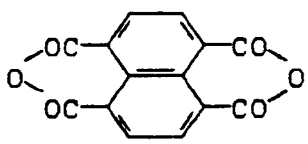 oder 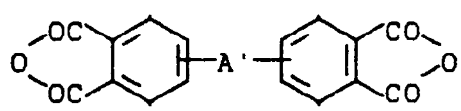 ,

in denen A' die obengenannte Bedeutung hat.

Ganz besonders vorteilhafte Ergebnisse werden erhalten, wenn man Carbonsäurederivate mitverwendet, die die Struktur

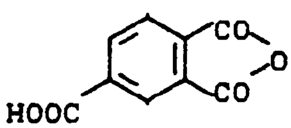 , 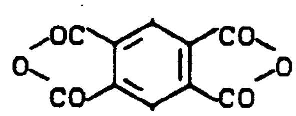

oder

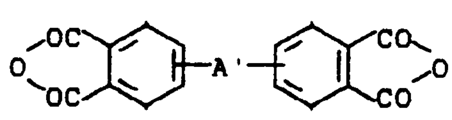

haben, in denen A' die weiter oben genannte Bedeutung hat.

Als unter die Formel (I) fallende mitzuverwendende Carbonsäurederivate sind auch solche der folgenden Struktur zu erwähnen:

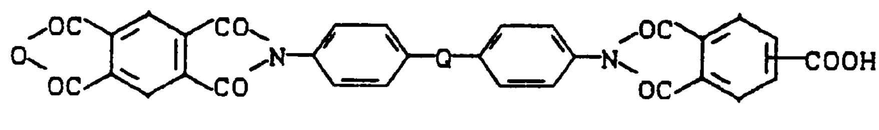 ,

in der

Q Strukturelemente wie -O-, -S-, $-SO_2-$, -CO-, -N=N-, $-CH_2-$ oder $-C(CH_3)_2-$ sein können.

Anstelle der bisher aufgeführten Carbonsäureanhydride können auch andere Säurederivate, z.B. die entsprechenden Ester oder die Polycarbonsäuren selbst eingesetzt werden, die im Verlaufe der Reaktion wie die Säureanhydride reagieren. Eine besonders bevorzugte Rolle spielt das Trimellitsäureanhydrid. Die Carbonsäureanhydride können in Mengen bis zu 90 Mol-%, bevorzugt bis zu 50 Mol-%, auch durch andere aromatische oder aliphatische Dicarbonsäuren, wie Isophthalsäure, Terephthalsäure oder Adipinsäure ersetzt werden.

In bevorzugter Weise wird das erfindungsgemäße Verfahren in einem kondensierten aromatischen Kohlenwasserstoff als dem flüssigen organischen Reaktionsmedium durchgeführt, der die Formel

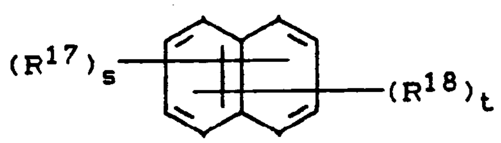 (IV)

hat, in der

$R^{17}$ und $R^{18}$ unabhängig voneinander geradkettiges oder verzweigtes $C_1$-$C_6$-Alkyl oder $C_1$-$C_4$-Alkoxy, Phenyl oder Chlor bedeuten und

s und t unabhängig voneinander die Werte null, eins oder zwei annehmen.

Selbstverständlich ist es möglich, als Reaktionsmedium auch ein Gemisch aus mehreren der genannten kondensierten aromatischen Kohlenwasserstoffe einzusetzen. Insbesondere ist es möglich, solche Gemische einzusetzen, die in der chemischen Technik üblich sind, beispielsweise Naphthalin-Destillatschnitte.

Solche kondensierten aromatischen Kohlenwasserstoffe als Reaktionsmedium werden in einer Menge von 50 bis 1.000 Gew.-%, bevorzugt 60 bis 500 Gew.-%, besonders bevorzugt 70 bis 300 Gew.-%, bezogen auf die Summe der Gewichte der α-Aminocarbonsäurederivate, der Isocyanate und der Carbonsäurederivate, eingesetzt. Bis zu 40 Gew.-%, bevorzugt bis zu 30 Gew.-% des kondensierten aromatischen Kohlenwasserstoffs oder eines Gemisches mehrerer von ihnen kann durch monocyclische aromatische Kohlenwasserstoffe, wie Toluol, Xylole, Ethylbenzol, Diethylbenzole, Propylbenzol, Isopropylbenzol, Chlortoluol, Chlorxylole und ähnliche ersetzt werden.

Beispiele für erfindungsgemäß einsetzbare kondensierte aromatische Kohlenwasserstoffe und deren Derivate sind: Naphthalin, Anthracen, Phenanthren, 1-Methylnaphthalin, 2-Methylnaphthalin, Diisopropylnaphthalin.

Die erfindungsgemäß herstellbaren Amidgruppen und/oder Imidgruppen aufweisenden Polyhydantoine sind solche auf der Basis von Umsetzungsprodukten von polyfunktionellen α-Aminocarbonsäurederivaten und organischen Polyisocyanaten. α-Aminocarbonsäurederivate für das erfindungsgemäße Verfahren sind solche der Formel

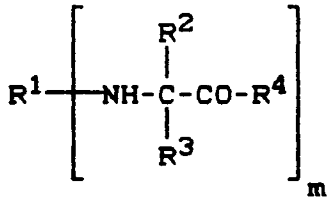 (V),

in der

$R^1$ der Rest eines geradkettigen oder verzweigten aliphatischen $C_2$-$C_{20}$-Kohlenwasserstoffs, eines $C_5$-$C_{12}$-(Alkyl)Cycloalkyl-Kohlenwasserstoffs, eines aromatischen $C_6$-$C_{12}$-Kohlenwasserstoffs, eines $C_7$-$C_{20}$-Aralkyl-Kohlenwasserstoffs, der Rest von Diphenylmethan, 2,2-Diphenylpropan oder Diphenylether oder eines 5 bis 12-gliedrigen aromatischen oder nicht-aromatischen Ringes mit 1 oder 2 Heteroatomen aus der Gruppe N und/oder S und/oder O bedeutet, wobei für den Fall mehrkerniger Reste jeder dieser Kerne mindestens einen der in eckigen Klammern stehenden Substituenten trägt.

$R^2$ und $R^3$ unabhängig voneinander Wasserstoff, geradkettiges oder verzweigtes $C_1$-$C_{10}$-Alkyl, Phenyl oder Benzyl bedeutet und

$R^4$ für Hydroxyl, Amino oder geradkettiges oder verzweigtes $C_1$-$C_{20}$-Alkoxy steht und

m eine Zahl von 2 bis 4 bedeutet.

Geradkettige oder verzweigte aliphatische $C_2$-$C_{20}$-Kohlenwasserstoffe sind beispielsweise Ethan, Propan, Butan, i-Butan, die isomeren Pentane, Hexane, Octane, Decane, Dodecane, Hexadecane oder Eikosane. In bevorzugter Weise seien $C_2$-$C_{10}$-Kohlenwasserstoffe, in besonders bevorzugter Weise $C_2$-$C_6$-Kohlenwasserstoffe, genannt.

$C_5$-$C_{12}$-(Alkyl)cycloalkyl-Kohlenwasserstoffe sind beispielsweise Cyclopentan, Methyl-cyclopentan, Cyclohexan, Methyl-cyclohexan, Cycloheptan, Cyclooctan und weitere durch ein oder mehrere niedere Alkylreste substituierte Cyclen der genannten Art sowie der dem Isophoron zugrunde liegende Kohlenwasserstoff.

Aromatische $C_6$-$C_{12}$-Kohlenwasserstoffe sind beispielsweise Benzol, Naphthalin und Biphenyl, bevorzugt Benzol und Naphthalin.

$C_7$-$C_{20}$-Aralkyl-Kohlenwasserstoffe sind beispielsweise Toluol, Xylol, Trimethylbenzol, Ethylbenzol, Diethylbenzol, Methylnaphthalin, Ethylnaphthalin; bevorzugt ist Toluol.

Unter den vielen, dem Fachmann bekannten heterocyclischen Systemen, ist hier bevorzugt das Thioxanthen-S-dioxid zu nennen.

Geradkettiges oder verzweigtes $C_1$-$C_{10}$-Alkyl ist beispielsweise Methyl, Ethyl, Propyl, i-Propyl, Butyl, i-Butyl, tert.-Butyl, hexyl, Octyl oder Decyl; bevorzugt ist $C_1$-$C_4$-Alkyl, besonders bevorzugt Methyl und Ethyl.

Geradkettiges oder verzweigtes $C_1$-$C_{20}$-Alkoxy ist beispielsweise Methoxy, Ethoxy, Propoxy, Isopropoxy, Butoxy, Isobutoxy, tert.-Butoxy, Amyloxy, Hexyloxy, Octyloxy, Decyloxy, Dodecyloxy, Hexadecyloxy, Eikoxyloxy; bevorzugt ist $C_1$-$C_6$-Alkoxy; besonders bevorzugt sind Methoxy und Ethoxy.

Die genannten Substituenten können ihrerseits einfach oder mehrfach mit Fluor, Chlor, Brom, Methyl, Ethyl, Propyl, Isopropyl, Butyl, Isobutyl, Methoxy, Ethoxy, Propoxy, Isoproxy, Butoxy, Isobutoxy, Phenyl, Benzyl oder Phenoxy substituiert sein. Für den Fall, daß $R^1$ Aryl bedeutet und durch Phenyl, Benzyl oder Phenoxy substituiert ist oder für den Fall, daß $R^1$ das Thioxanthen-S-dioxid bedeutet, kann die durch den Index m angedeutete, mindestens zweifache Substitution von $R^1$, auch auf verschiedenen aromatischen Kernen erfolgen.

$R^2$ und $R^3$ können auch gemeinsam eine $C_4$-$C_5$-Alkylenkette bilden, so daß gemeinsam mit dem durch sie substituierten C-Atom ein cyclisches System entsteht.

Bevorzugte α-Aminocarbonsäurederivate der Formel (V) sind solche, in denen anstelle von $R^1$ der Rest $R^{11}$ tritt, der von einem $C_5$-$C_9$-(Alkyl)cycloalkyl-Kohlenwasserstoff, einem aromatischen $C_6$-$C_{12}$-Kohlenwasserstoff oder vom Thioxanthen-S-dioxid stammt.

Weitere bevorzugte α-Aminocarbonsäurederivate der Formel (V) sind solche, in denen anstelle der Reste $R^2$ und $R^3$ die Reste $R^{12}$ und $R^{13}$ treten, die unabhängig voneinander Wasserstoff oder $C_1$-$C_4$-Alkyl bedeuten.

Weitere bevorzugte α-Aminocarbonsäurederivate der Formel (V) sind solche, in denen anstelle des Restes $R^4$ der Rest $R^{14}$ tritt, der geradkettiges oder verzweigtes $C_1$-$C_6$-Alkoxy, besonders bevorzugt Methoxy oder Ethoxy, bedeutet. Weiterhin bevorzugte α-Aminocarbonsäurederivate der Formel (V) sind solche, in denen Index m Werte von 2 oder 3, besonders bevorzugt den Wert 2, annimmt.

Grundsätzlich ist es auch denkbar, statt der polyfunktionellen α-Aminocarbonsäurederivate der Formel (V) monofunktionelle in geringem Umfange zuzusetzen, bei denen also der Index m den Wert 1 annimmt, um damit das Molekulargewicht in einer dem Fachmann grundsätzlich bekannten Weise einzustellen.

Die Herstellung solcher α-Aminocarbonsäurederivate ist im Prinzip bekannt und kann z.B. durch Umsetzung von Aminen oder Aminocarbonsäuren mit Halogenessigsäure oder ihren Derivaten nach der Formelgleichung

$$R^1\text{-}(\text{-}NH_2)_m + m\ Hal\text{-}C(R^2,R^3)\text{-}COR^4 \xrightarrow[-m\ HHal]{} R^1\text{-}[NH\text{-}C(R^2,R^3)\text{-}COR^4]_m$$

oder auch durch Kondensation mit Blausäure und Aldehyden oder Ketonen unter nachfolgenderUmwandlung der Nitrilgruppe in die Carbonsäuregruppe, die Estergruppe oder die Amidgruppe erfolgen.

Polyisocyanate für das erfindungsgemäße Verfahren sind solche der Formel

$$R^5\text{-}(\text{-NCO})_n \qquad (VI),$$

in der

$R^5$ unabhängig von $R^1$ den Bedeutungsumfang von $R^1$ annimmt und

n Werte von 2 bis 4 annimmt.

Die Reste $R^5$ im genannten Bedeutungsumfang können in gleicher Weise, wie dies für $R^1$ beschrieben ist, substituiert sein.

Bevorzugte Polyisocyanate sind solche der Formel (VI), worin anstelle von $R^5$ der Rest $R^{15}$ tritt, der sich von geradkettigen oder verzweigten aliphatischen $C_2$-$C_{12}$-Kohlenwasserstoffen, vom Benzol, vom Toluol, vom Naphthalin, vom Diphenylmethan oder vom Diphenylether ableitet.

In weiterer bevorzugter Weise tritt anstelle des Index n der Index n', der die Zahlenwerte 2 oder 3 annehmen kann und besonders bevorzugt der Index n" mit dem Zahlenwert 2. Polyisocyanate der Formel (VI) sind aus der Polyurethanchemie bekannt und können beispielsweise sein: Ethylen-diisocyanat, 1,4-Tetramethylendiisocyanat, 1,6-Hexamethylen-diisocyanat, 1,2,12-Dodecan-diisocyanat, Cyclopentan-1,3-diisocyanat, Cyclohexan-1,3- und -1,4-diisocyanat sowie beliebige Gemische dieser Isomeren, 1-Isocyanato-3,3,5-Trimethyl-5-isocyanato-methylcyclohexan (Isophoron-diisocyanat), 2,4- und 2,6-Hexahydrotoluylen-diisocyanat sowie beliebige Gemische dieser Isomeren, Hexahydro-1,3-und/oder -1,4-phenylendiisocyanat, Perhydro-2,4'-und/oder -4,4'-diphenylmethan-diisocyanat, 1,3-und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-Polymethylen-Polyisocyanate, wie sie durch Anilin-Formaldehyd-Kondensation und anschließende Phosgenierung erhalten werden, perchlorierte Arylpolyisocyanate (DE-AS 11 57 601), Carbodiimidgruppen aufweisende Polyisocyanate (DE-PS 10 92 007), Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate durch Telomerisationsreaktionen hergestellte Polyisocyanate, Estergruppen aufweisende Polyisocyanate und Umsetzungsprodukte solcher Isocyanate mit Acetalen (DE-PS 10 72 358).

Es ist auch möglich, die bei der technischen Isocyanatherstellung anfallenden, Isocyanatgruppen aufweisenden Destillationsrückstande, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt verwendet werden die technisch leicht zugänglichen Gemische aus Toluylen-diisocyanaten, m-Phenylendiisocyanat, sowie phosgenierte Kondensate aus Anilin und Formaldehyd mit Polyphenylen-methylen-Struktur und die symmetrischen Verbindungen 4,4'-Diisocyanato-diphenylmethan, 4,4'-Diisocyanato-diphenylether, p-Phenylen-diisocyanat und 4,4'-Diisocyanato-diphenyldimethylmethan sowie Isophorondiisocyanat und Hexamethylendiisocyanat.

Die Isocyanate können in freier Form, ferner zum Teil oder vollständig auch in Form ihrer beim Umsatz mit reaktiven Wasserstoff enthaltenden Verbindungen zugänglichen Derivaten eingesetzt werden, die unter den Reaktionsbedingungen als Isocyanat-Abspalter das zugrunde liegende Isocyanat wieder freisetzen.

Als solche Abspalter werden vorzugsweise die Additionsprodukte aus Lactamen, Oximen und CH-aciden Verbindungen sowie die aus aliphatischen Mono- und Polyhydroxyverbindungen erhaltenen Carbamidsäureester eingesetzt. Solche Isocyanat-Abspalter und ihre Herstellung sind aus der Polyurethanchemie bekannt.

Anstelle der genannten Polyisocyanate können auch die analogen Polyisothiocyanate als Ausgangsmaterialien benutzt werden.

Aus den $\alpha$-Aminocarbonsäurederivaten der Formel (V) und den Polyisocyanaten der Formel (VI) bilden sich in einer ersten Reaktion Polyharnstoffe und in einer zweiten Reaktion unter Abspaltung von $R^4H$ und gleichzeitiger Cyclokondensation Polyhydantoine, etwa nach der folgenden Formelgleichung:

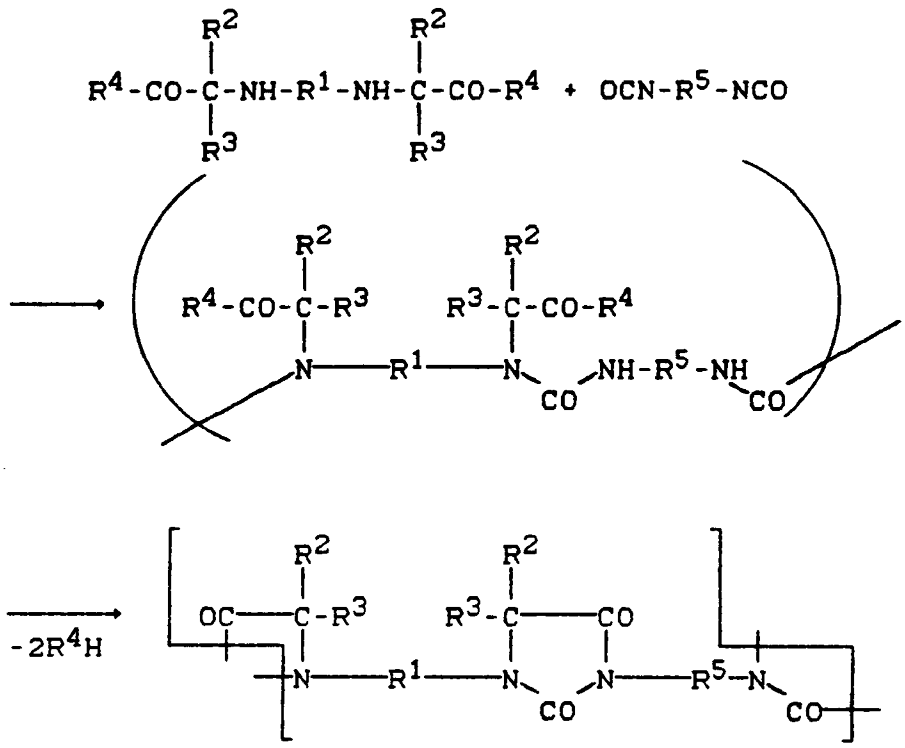


In diesen Formeln erscheinen in den runden Klammern die wiederkehrenden Einheiten des Polyharnstoffs und in den gebrochenen eckigen Klammern die wiederkehrenden Einheiten des Polyhydantoins.

Erfindungsgemäß werden nun die formelmäßig dargestellten Polyharnstoffe bzw. die daraus entstehenden Polyhydantoine so modifiziert, daß sie Amidgruppen und/oder Imidgruppen aufweisen. Zu diesem Zweck wird ein Teil der polyfunktionellen α-Aminocarbonsäurederivate durch die mitzuverwendenden Carbonsäurederivate der Formel (I) ersetzt. Dieser Ersatz kann zu 1 bis 99 Mol-%, bevorzugt zu 10 bis 90 Mol-%, vorgenommen werden. Dieser anstelle von α-Aminocarbonsäureestereinheiten vorzunehmende Einbau von Carbonsäurederivaten zwischen zwei Moleküle der Polyisocyanate kann formelmäßig am Beispiel eines eine Carboxylgruppe und eine Anhydridgruppe aufweisenden Carbonsäurederivats wie folgt dargestellt werden:

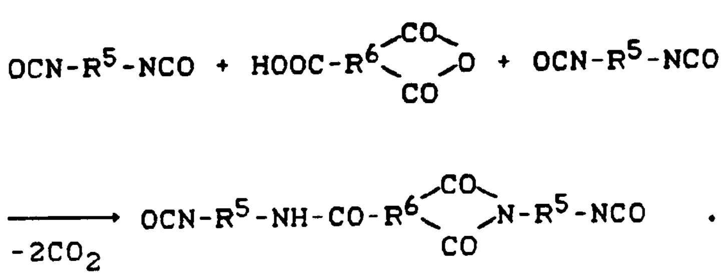


Diese formelmäßige Darstellung zeigt sowohl die Bildung einer Amidgruppe als auch die Bildung einer Imidgruppe in erfindungsgemäßer Weise. Durch Verwendung anderer Carbonsäurederivate der Formel (I), wie oben beschrieben, können in erfindungsgemäßer Weise herstellbare modifizierte Polyhydantoine hergestellt werden, die zusätzlich zu den aus den Harnstoffgruppen entstehenden Hydantoingruppen nur Amidgruppen oder nur Imidgruppen aufweisen. Im allgemeinen wird man erfindungsgemäß herstellbare modifizierte Polyhydantoine herstellen, die sowohl Amidgruppen als auch Imidgruppen aufweisen.

Für den Fall, daß beide Indices m und n den Wert 2 annehmen, erhält man lineare Produkte. Für den Fall, daß einer der Indices einen höheren Wert annimmt, erhält man verzweigte Produkte. Wenn man ein Gemisch verschiedener Stoffe der Formel (V) einsetzt, die verschiedene Funktionalität haben (ein Gemisch von Bisglycinderivat mit m = 2 und Tris-glycinderivat und m = 3 oder noch höhere), ergibt sich statt einer ganzen Zahl

für den Index m im Durchschnitt des gesamten Einsatzes vom Material der Formel (V) eine gebrochene Indexzahl. Das gleiche kann für Polyisocyanate, die unter die Formel (VI) fallen, gelten. Werden nun beide Indices m und n gleichzeitig über den Wert 2 angehoben, entsteht aus dem verzweigten Produkt sehr leicht bereits während der Herstellungsreaktion ein vernetztes Produkt. Dies ist technisch nicht sinnvoll und daher nicht erwünscht. Daher wird in bevorzugter Weise immer einer der Indices m und n den Wert 2 annehmen.

Das erfindungsgemäße Verfahren wird im allgemeinen so durchgeführt, daß man das polyfunktionelle $\alpha$-Aminocarbonsäurederivat und das mitzuverwendende Carbonsäurederivat der Formel (I) in einem kondensierten aromatischen Kohlenwasserstoff der Formel (II) als dem flüssigen Reaktionsmedium vorlegt, das Polyiso(thio)cyanat zugibt und längere Zeit erhitzt. Die Gesamtmenge des polyfunktionellen $\alpha$-Aminocarbonsäurederivats und des mitzuverwendenden Carbonsäurederivats der Formel (I) kann so gewählt werden, daß pro Äquivalent der reaktionsfähigen Carbonsäure-, Carbonsäurederivat- bzw. Anhydridgruppe 0,5 bis 10 Äquivalente Iso(thio)cyanatgruppen, bevorzugt 1-2 Äquivalente, umgesetzt werden. Nach der Umsetzung mit Isocyanat schließt sich die dem Fachmann bekannte Bildung der Hydantoinringe bei höherer Temperatur an.

Die Reaktionstemperaturen für das Gesamtverfahren werden im Bereich von 0 bis 500°C, bevorzugt im Bereich von 20 bis 300°C, gewählt. Hierbei wird die zunächst erfolgende Umsetzung zu Harnstoff-, Amid- bzw. Imidgruppen im unteren Teil dieses Temperaturbereiches, beispielsweise bei 0 bis 80°C, bevorzugt bei 20 bis 5°C, durchgeführt und die Cyclisierung zu den Hydantoingruppen bei 80 bis 500°C, bevorzugt bei 80 bis 300°C, durchgeführt.

Das erfindungsgemäße Verfahren ist grundsätzlich nicht kritisch bezüglich des anzuwendenden Druckes. Daher wird es bevorzugt unter Normaldruck ausgeführt. Ein etwas erhöhter Druck kann dann sinnvoll sein, wenn neben dem kondensierten aromatischen Kohlenwasserstoff (II) niedrigsiedende Gemischanteile, wie Toluol oder Xylol oder ähnliche, mitverwendet werden.

Die Cyclisierung zu den Hydantoingruppen kann durch bekannte Katalysatoren, beispielsweise Metallalkoholate, tert. Amine und andere, beschleunigt werden.

Im Verlauf der Polymerreaktion fallen die gebildeten Polymere als Feststoffe aus und können durch einfache mechanische Trenn- und anschließende Waschverfahren von den kondensierten aromatischen Kohlenwasserstoffen als dem Reaktionsmedium befreit werden. Dies war nicht zu erwarten, da nach den Erwartungen des Fachmanns ein Anbacken an den Gefäßwänden oder am Rührer erwartet werden mußte, was wiederum negative Rückwirkungen auf eine ausreichende Temperaturkontrolle zu haben schien.

Im Verlaufe der Durchführung des erfindungsgemäßen Verfahrens können auch andere polymere Stoffe, wie Polyester, Polyamide, Polyurethane, Polyolefine, Polyacetale, Polyepoxide, Polyimide, Polyamidimide, Polyiminopolyester, Polyimid-isocyanate, mitzugesetzt oder einpolymerisiert werden. Solche anderen Polymere können aber auch nachträglich als Legierungsbestandteile für die erfindungsgemäß herstellbaren modifizierten Polyhydantoine eingesetzt werden.

Die nach dem erfindungsgemäßen Verfahren erhaltenen modifizierten Polyhydantoine sind temperaturbeständige Chemiewerkstoffe, die ausgezeichnete mechanische Eigenschaften besitzen. Sie können die für Chemiewerkstoffe üblichen Zusätze, wie Füllstoffe, Pigmente, Antioxidantien, Weichmacher u.a. enthalten.

Die erfindungsgemäß erhältlichen modifizierten Polyhydantoine sind frei von umweit- und gesundheitsschädlichen Lösungsmitteln und eignen sich daher in hervorragender Weise zur Verwendung als Thermoplaste, Gießfolien oder Einbrennlacke unter moderneren ökologischen Gesichtspunkten.

Beispiel 1

Zu einer Mischung aus 1,92 g Trimellitsäureanhydrid, 60 g 2-Methylnaphthalin, 20 g Toluol und 39,85 g N,N'-bis-(2-carbomethoxy)-4,4'-diamino-diphenylmethan wurden 28,08 g 4,4'-Diisocyanato-diphenylmethan zugesetzt und 12 Stunden bei 40°C gerührt. Nach dem Zusatz von 0,85 g Anilino-i-buttersäuremethylester, 0,1 g Triethylendiamin und 30 g 2-Methylnaphthalin wurde 6 Stunden bei 210°C kondensiert. Die entstandene Suspension wurde abgesaugt und mit Toluol nachgewaschen. Nach dem Trocknen erhielt man 60 g eines farblosen Polymerpulvers, welches im IR-Spektrum die für ein Hydantoin typischen Banden aufwies.

Die Bestimmung der relativen Viskosität ergab einen Wert von 2,23 (1 %ig in m-Kresol/25°C); die Glasumwandlungstemperatur betrug 244°C.

Zur Herstellung einer Gießfolie wurden 15 Gew.-Tle. des Polymers in 85 Gew.-Tln. Methylenchlorid gelöst, entlüftet und auf einer Glasplatte zur Folie ausgezogen. Nach dem Abdampfen des Lösungsmittels und Trocknen bei 160°C erhielt man eine farblose klare Folie.

Beispiele 2 und 3

Analog Beispiel 1 wurden die folgenden Reaktionsansätze in Polyhydantoine umgewandelt:

Reaktionsansatz für Beispiel 2:

| | |
|---|---|
| 1,92 g | Trimellitsäureanhydrid |
| 39,85 g | N,N'-Bis-(2-carbomethoxypropyl)-4,4'-diamino-diphenylmethan |
| 0,85 g | Anilino-i-buttersäuremethylester |
| 0,1 g | Triethylendiamin |
| 28,08 g | 4,4'-Diisocyanato-diphenylmethan |
| 150 g | Naphthalin |
| 30 g | Toluol. |

Nach beendeter Reaktion lag eine Polymersuspension vor, die nach Verdünnen mit 100 g Toluol abgesaugt wurde. Das Polymer hatte folgende Kenndaten:
rel. Viskosität 37,7: 2,05 1 %ig in m-Kresol/25°C
Glasumwandlungstemperatur: 254°C

Reaktionsansatz für Beispiel 3:

| | |
|---|---|
| 1,92 g | Trimellitsäureanhydrid |
| 39,85 g | N,N-Bis-(2-carbomethoxypropyl)-4,4'-diamino-diphenylmethan |
| 0,85 g | Anilino-i-buttersäuremethylester |
| 0,1 g | Triethylendiamin |
| 28,08 g | 4,4'-Diisocyanato-diphenylmethan |
| 120 g | Diisopropyl-naphthalin |
| 30 g | Toluol. |

Man erhielt 52,4 g eines farblosen Polymers mit folgenden Kenndaten:
rel. Viskosität (1 %ig in Kresol/25°C): 1,85
Glasumwandlungstemperatur: 251°C.

Beispiel 4 (zum Vergleich)

Zu einer Mischung aus 1,92 g Trimellitsäureanhydrid, 60 g Diethylbenzol (Isomerengemisch), 39,85 g N,N'-bis-(2-carbomethoxypropyl)-4,4'-diamino-diphenylmethan wurden 28,08 g 4,4'-Diisocyanato-diphenylmethan zugesetzt und 12 Stunden bei 40°C nachgerührt. Nach dem Zusatz von 0,85 g Anilino-i-buttersäuremethylester und 0,1 g Triethylendiamin wurde der Ansatz 6 Stunden bei 200°C cyclokondensiert. Im Verlaufe dieser Reaktion entstand eine dunkelbraune, vernetzte, nicht mehr rührbare Masse. Im IR-Spektrum waren nur andeutungsweise die für die Hydantoingruppe typischen Banden zu erkennen. Die Herstellung einer Gießfolie war nicht möglich, da es sich um ein in den üblichen Lösungsmitteln unlösliches Polymer handelte.

Beispiel 5 (zum Vergleich)

Zu einer Mischung aus 1,92 g Trimellitsäureanhydrid, 60 g $\gamma$-Butyrolacton und 39,85 g N,N'-bis-(2-carbomethoxypropyl)-4,4'-diamino-diphenylmethan wurden 28,08 g 4,4'-Diisocyanato-diphenylmethan zugesetzt und 12 Stunden bei 40°C nachgerührt. Nach dem Zusatz von 0,85 g Anilino-i-buttersäuremethylester und 0,1 g Triethylendiamin wurde 6 Stunden bei 210°C cyclokondensiert. Man erhielt 122,8 g einer braunen, hochviskosen Lösung, die mit 300 ml Methylenchlorid verdünnt und in 2,5 l Methanol eingetropft wurde. Nach dem Absaugen und Trocknen erhielt man 61 g eines hellbraunen Polymerpulvers mit folgenden Kenndaten:
rel. Viskosität (1 % in m-Kresol/25°C): 1,84
Glasumwandlungstemperatur: 234°C.

Eine analog Beispiel 1 hergestellte Gießfolie hatte eine tiefgelbe Farbe.

## Patentansprüche

1. Verfahren zur Herstellung von Amidgruppen und/oder Imidgruppen aufweisenden Polyhydantoinen auf der Basis von Umsetzungsprodukten von polyfunktionellen $\alpha$-Aminocarbonsäurederivaten und organischen Polyiso(thio)cyanaten in flüssigen organischen Reaktionsmedien, dadurch gekennzeichnet, daß man die Umsetzung unter Mitverwendung von Carbonsäurederivaten der Formel

$X\text{-}R^6{<}^{Y}_{Z}$,

in der

| | |
|---|---|
| X | eine Carboxylgruppe oder eine cyclische Anhydridgruppe aus zwei benachbarten Carboxylgruppen bedeutet, |
| Y und Z | je eine Carboxylgruppe oder gemeinsam eine cyclische Anhydridgruppe aus zwei benachbarten Carboxylgruppen bedeuten und weiterhin |
| Z | zusätzlich Wasserstoff bedeuten kann, wenn X und Y gemeinsam kein cyclisches Anhydrid bilden können, und |
| $R^6$ | für den Rest eines geradkettigen oder verzweigten aliphatischen $C_2$-$C_{10}$-Kohlenwasserstoffs, eines cycloaliphatischen $C_5$-$C_{10}$-Kohlenwasserstoffs, eines aromatischen $C_6$-$C_{14}$-Kohlenwasserstoffs oder den Rest von Verbindungen der Struktur |

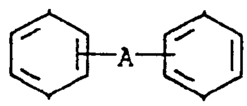,

in der

| | |
|---|---|
| X bzw. Y und Z | an je einen Benzolkern gebunden sind und |
| A | eine der folgenden Gruppen |

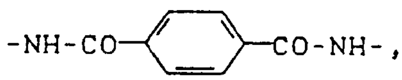, 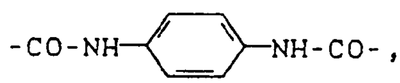,

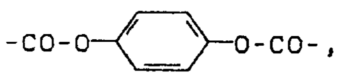, 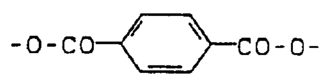,

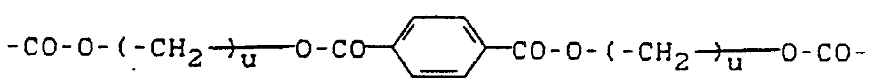

mit u = 2-6,

$-CO-O-(-CH_2-)_u-O-CO-$

mit u = 2-6, -O-, -S-, $-SO_2-$, -CO-, -N=N-, $-CH_2-$ oder $-C(CH_3)_2-$, bedeutet und in einem kondensierten aromatischen Kohlenwasserstoff der Formel

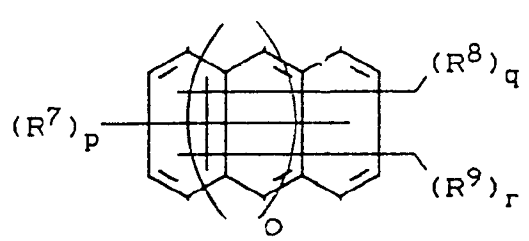,

in der

| | |
|---|---|
| $R^7$, $R^8$ und $R^9$ | unabhängig voneinander geradkettiges oder verzweigtes $C_1$-$C_8$-Alkyl oder $C_1$-$C_8$-Alkoxy, $C_5$-$C_8$-Cycloalkyl, Phenyl, Fluor, Chlor, Brom oder Nitro bedeuten, |
| o | den Wert null oder eins annehmen kann, wobei der Wert eins eine lineare oder angulare Verknüpfung der aromatischen Kerne beinhaltet, und |

p, q und r — unabhängig voneinander die Werte null, eins, zwei oder drei annehmen, wobei jedoch ihre Summe auf maximal sechs begrenzt ist,

bei 0 bis 500°C durchführt.

2. Verfahren nach Anspruch 1, dadurch gekennzeichnet, daß ein Carbonsäurederivat der Formel

$$X-R^{16}<^{Y}_{Z}$$

mitverwendet wird, in der

X, Y und Z — die in Anspruch 1 genannte Bedeutung haben und

$R^{16}$ — für den Rest eines aromatischen $C_6$-$C_{10}$-Kohlenwasserstoffs oder den Rest von Verbindungen der Struktur

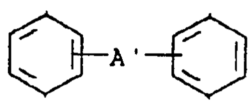,

in der

X bzw, Y und Z — an je einen Benzolkern gebunden sind und

A' — eine der folgenden Gruppen bedeutet:

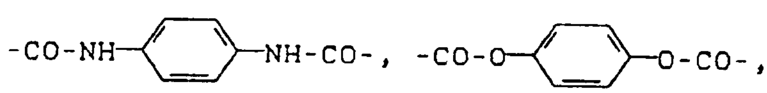

$$-CO-O-(-CH_2-)_u-O-CO-$$

mit u = 2-6, -CO-, $-C(CH_3)_2-$.

3. Verfahren nach einem der Ansprüche 1 oder 2, dadurch gekennzeichnet, daß im mitverwendeten Carbonsäurederivat anstelle von X der Rest X' tritt, der eine Carboxylgruppe oder eine cyclische Anhydridgruppe aus zwei benachbarten Carboxylgruppen bedeutet, und anstelle von Y und Z die Reste Y' und Z' treten, die gemeinsam eine cyclische Anhydridgruppe aus zwei benachbarten Carboxylgruppen bedeuten.

4. Verfahren nach Anspruch 2, dadurch gekennzeichnet, daß Carbonsäurederivate der Struktur

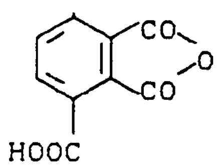, 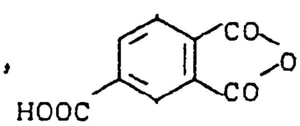, 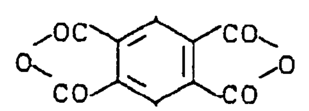,

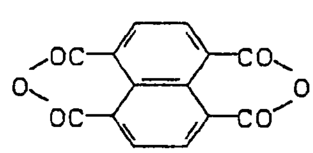 oder 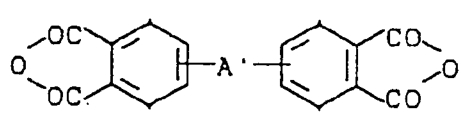,

mitverwendet werden, wobei A' die in Anspruch 2 genannte Bedeutung hat.

5. Verfahren nach Anspruch 4, dadurch gekennzeichnet, daß Carbonsäurederivate der Struktur

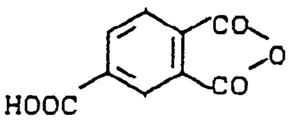 , 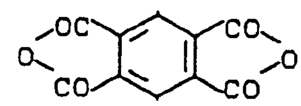

oder 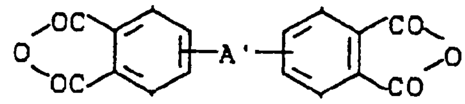

mitverwendet werden, wobei A' die in Anspruch 2 genannte Bedeutung hat.

6. Verfahren nach Anspruch 1, dadurch gekennzeichnet, daß das mitzuverwendende Carbonsäurederivat das α-Amino-carbonsäurederivat zu 1 bis 99 Mol-% ersetzt.

7. Verfahren nach Anspruch 1, dadurch gekennzeichnet, daß die Umsetzung in einem kondensierten aromatischen Kohlenwasserstoff der Formel

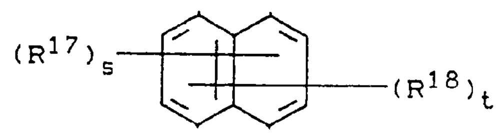

durchgeführt wird, in der

| | |
|---|---|
| $R^{17}$ und $R^{18}$ | unabhängig voneinander geradkettiges oder verzweigtes $C_1$-$C_6$-Alkyl oder $C_1$-$C_4$-Alkoxy, Phenyl oder Chlor bedeuten und |
| s und t | unabhängig voneinander die Werte null, eins oder zwei annehmen. |

8. Verfahren nach einem der Ansprüche 1 oder 7, dadurch gekennzeichnet, daß als Reaktionsmedium ein Gemisch mehrerer kondensierter aromatischer Kohlenwasserstoffe eingesetzt wird.

9. Verfahren nach Anspruch 1, dadurch gekennzeichnet, daß der kondensierte aromatische Kohlenwasserstoff in einer Menge von 50 bis 1000 Gew,-%, bezogen auf die Summe der Gewichte der α-Aminocarbonsäurederivate, Isocyanate und mitzuverwendenden Carbonsäurederivate, eingesetzt wird.

## Claims

1. A process for the production of polyhydantoins containing amide and/or imide groups based on reaction products of polyfunctional α-aminocarboxylic acid derivatives and organic polyiso(thio)cyanates in liquid organic reaction media, characterized in that the reaction is carried out at 0 to 500°C using carboxylic acid derivatives corresponding to the following formula

$$X\text{-}R^6<^{Y}_{Z} \qquad (I)$$

in which

| | |
|---|---|
| X | is a carboxyl group or a cyclic anhydride group from two adjacent carboxyl groups, |
| Y and Z | each represent a carboxyl group or, together, represent a cyclic anhydride group from two adjacent carboxyl groups and |
| Z | may additionally represent hydrogen where X and Y together cannot form a cyclic anhydride and |
| $R^6$ | represents the residue of a linear or branched, aliphatic $C_{2-10}$ hydrocarbon, a cycloaliphatic $C_{5-10}$ hydrocarbon, an aromatic $C_{6-14}$ hydrocarbon or the residue of compounds having the following structure |

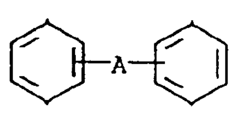 ,

in which

| | |
|---|---|
| X or Y and Z | are each attached to a benzene nucleus and |
| A | represents one of the following groups |

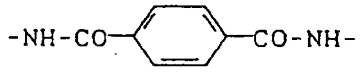
,
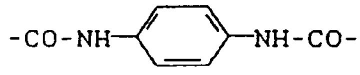
,

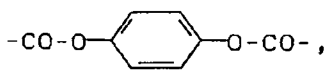
,
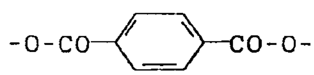
,

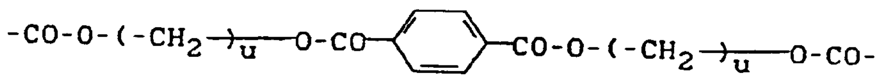

with u = 2-6,

$$-CO-O-(-CH_2-)_u-O-CO-$$

with u = 2-6, -O-, -S-, $-SO_2-$, -CO-, -N=N-, $-CH_2-$ or $-C(CH_3)_2-$,
and in a condensed aromatic hydrocarbon corresponding to the following formula

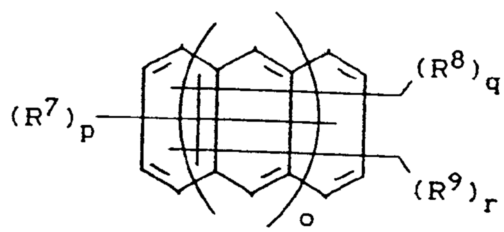
,

in which

| | |
|---|---|
| $R^7$, $R^8$ and $R^9$ | independently of one another represent linear or branched $C_{1-8}$ alkyl or $C_{1-8}$ alkoxy, $C_{5-8}$ cycloalkyl, phenyl, fluorine, chlorine, bromine or nitro, |
| o | may assume the value 0 or 1, the value 1 incorporating a linear or annular linkage of the aromatic nuclei, and |
| p, q and r | independently of one another assume the values 0, 1, 2 or 3, although their sum is limited to at most 6. |

**2.** A process as claimed in claim 1, characterized in that a carboxylic acid corresponding to the following formula

$$X-R^{16}<{}^{Y}_{Z} \qquad (III)$$

in which

| | |
|---|---|
| X, Y and Z | are as defined above and |
| $R^{16}$ | represents the residue of an aromatic $C_{6-10}$ hydrocarbon or the residue of compounds having the following structure |

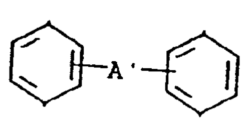
,

in which

X or Y and Z are each attached to a benzene nucleus and

A' represents one of the following groups:

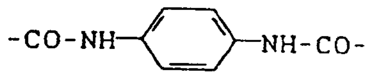, 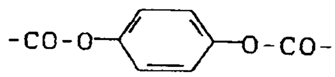,

$-CO-O-(-CH_2-)_u-O-CO-$

with u = 2-6, -CO-, $-C(CH_3)_2-$.

3. A process as claimed in claim 1 or 2, characterized in that, in the carboxylic acid derivative incorporated, X is replaced by X' which represents a carboxyl group or a cyclic anhydride group from two adjacent carboxyl groups and Y and Z are replaced by Y' and Z' which, together, represent a cyclic anhydride group from two adjacent carboxyl groups.

4. A process as claimed in claim 2, characterized in that carboxylic acid derivatives having the following structure

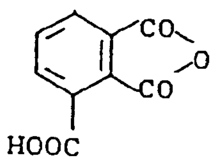, 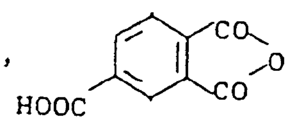, 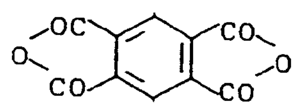,

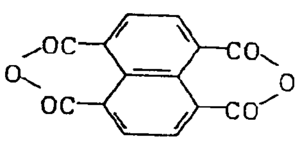 or 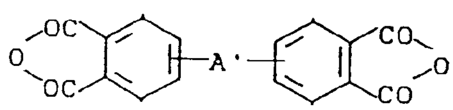,

in which A' is as defined in claim 2, are incorporated.

5. A process as claimed in claim 4, characterized in that carboxylic acid derivatives having the following structure

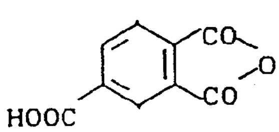, 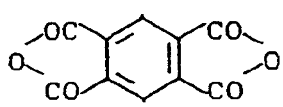

or 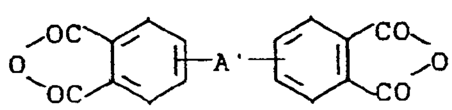

in which A' is as defined in claim 2, are incorporated.

6. A process as claimed in claim 1, characterized in that the carboxylic acid derivative to be incorporated replaces from 1 to 99 mol-% of the α-aminocarboxylic acid derivative.

7. A process as claimed in claim 1, characterized in that the reaction is carried out in a condensed aromatic hydrocarbon corresponding to the following formula

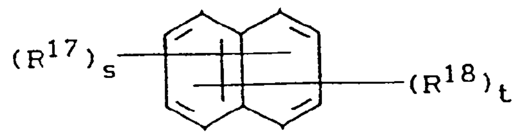

in which

$R^{17}$ and $R^{18}$ independently of one another represent linear or branched $C_{1-6}$ alkyl or $C_{1-4}$ alkoxy, phenyl or chlorine and

s and t independently of one another assume the values 0, 1 or 2.

**8.** A process as claimed in claim 1 or 7, characterized in that a mixture of several condensed aromatic hydrocarbons is used as the reaction medium.

**9.** A process as claimed in claim 1, characterized in that the condensed aromatic hydrocarbon is used in a quantity of from 50 to 1,000% by weight, based on the sum of the weights of the α-aminocarboxylic acid derivatives, isocyanates and carboxylic acid derivatives to be incorporated.

## Revendications

**1.** Procédé de préparation de polyhydantoïnes à groupes amide et/ou imide à base de produits de réaction de dérivés polyfonctionnels d'acides α-aminocarboxyliques et de polyiso(thio)cyanates organiques dans des milieux de réaction organiques liquides, caractérisé en ce que l'on effectue la réaction à des températures de 0 à 500°C avec utilisation conjointe de dérivés d'acides carboxyliques de formule

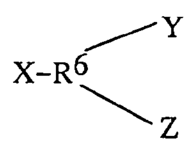 ,

dans laquelle

X représente un groupe carboxyle ou un groupe anhydride cyclique formé à partir de deux groupes carboxyle voisins,

Y et Z représentent chacun un groupe carboxyle ou bien, ensemble, un groupe anhydride cyclique formé à partir de deux groupes carboxyle voisins,

Z pouvant en outre représenter l'hydrogène à condition que X et Y ne forment pas ensemble un anhydride cyclique, et

$R^6$ représente le radical d'un hydrocarbure aliphatique à chaîne droite ou ramifiée en $C_2$-$C_{10}$, d'un hydrocarbure cycloaliphatique en $C_5$-$C_{10}$, d'un hydrocarbure aromatique en $C_6$-$C_{14}$ ou le radical d'un composé de structure

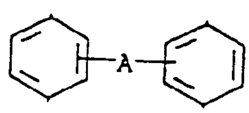 ,

dans laquelle

X, d'une part, Y et Z, d'autre part, sont reliés à des noyaux benzéniques différents,

A représente l'un des groupes suivantes:

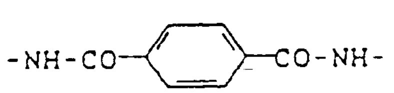 , 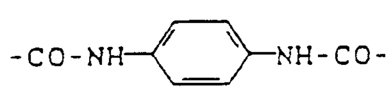 ,

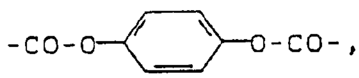, 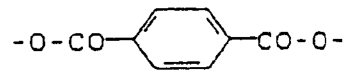,

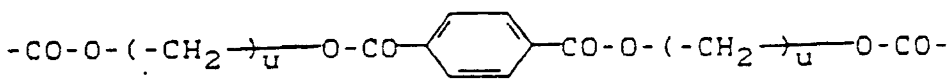

avec u = 2-6,

$$-CO-O-(-CH_2-)_u-O-CO-$$

avec u = 2-6, -O-, -S-, $-SO_2-$, -CO-, -N=N-, $-CH_2-$ ou $-C(CH_3)_2-$, et dans un hydrocarbure aromatique condensé de formule

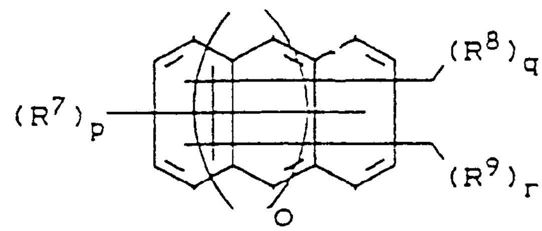,

dans laquelle

$R^7$, $R^8$ et $R^9$ représentent chacun, indépendamment les uns des autres, un groupe alkyle en $C_1$-$C_8$ ou alcoxy en $C_1$-$C_8$ à chaîne droite ou ramifiée, un groupe cycloalkyle en $C_5$-$C_8$, un groupe phényle, le fluor, le chlore, le brome ou un groupe nitro,

o est égal à 0 ou 1 et, dans le cas où il est égal à 1, il peut y avoir liaison linéaire ou angulaire des noyaux aromatiques, et

p, q et r sont égaux chacun, indépendamment les uns des autres, à 0, 1, 2 ou 3, leur somme étant toutefois limitée à un maximum de 6.

**2.** Procédé selon la revendication 1, caractérisé en ce que l'on utilise conjointement un dérivé d'acide carboxylique de formule

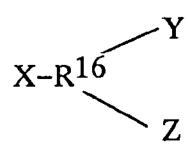

dans laquelle

X, Y et Z ont les significations indiquées dans la revendication 1 et

$R^{16}$ représente le radical d'un hydrocarbure aromatique en $C_6$-$C_{10}$ ou le radical d'un composé de structure

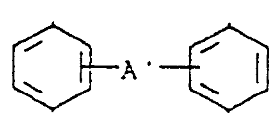,

dans laquelle

X, d'une part, Y et Z, d'autre part, sont reliés à des noyaux benzéniques différents et

A' représente l'un des groupes suivants :

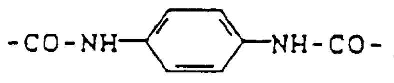, 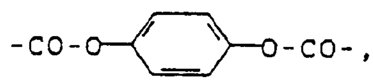,

$-CO-O-(-CH_2-)_u-O-CO-$

avec u = 2-6, -CO-, $-C(CH_3)_2-$.

3. Procédé selon l'une des revendications 1 ou 2, caractérisé en ce que, dans le dérivé d'acide carboxylique utilisé conjointement, il y a, à la place de X, le groupe X' qui est un groupe carboxyle ou un groupe anhydride cyclique formé à partir de deux groupes carboxyle voisins et, à la place de Y et Z, il y a Y' et Z' qui représentent ensemble un groupe anhydride cyclique formé à partir de deux groupes carboxyle voisins.

4. Procédé selon la revendication 2, caractérisé en ce que l'on utilise conjointement des dérivés d'acides carboxyliques de structures

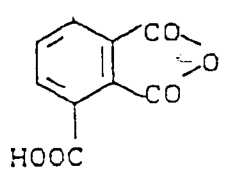, 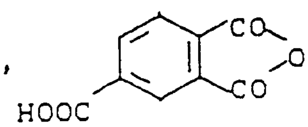, 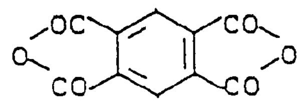,

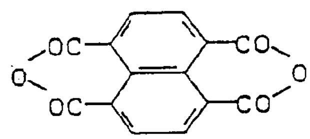 ou 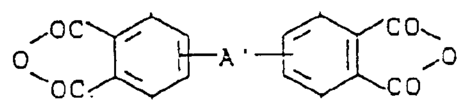,

dans lesquelles A' a les significations indiquées dans la revendication 2.

5. Procédé selon la revendication 4, caractérisé en ce que l'on utilise conjointement des dérivés d'acides carboxyliques de structures

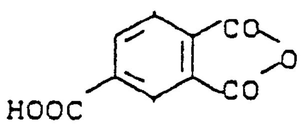, 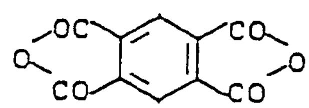

ou 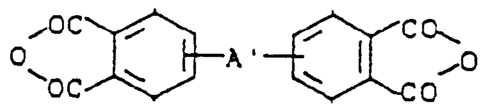

dans lesquelles A' a les significations indiquées dans la revendication 2.

6. Procédé selon la revendication 1, caractérisé en ce que l'on remplace de 1 à 99 mol% du dérivé d'acide $\alpha$-aminocarboxylique par le dérivé d'acide carboxylique utilisé conjointement.

7. Procédé selon la revendication 1, caractérisé en ce que l'on effectue la réaction dans un hydrocarbure aromatique condensé de formule

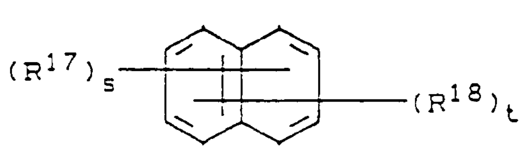

dans laquelle

$R^{17}$ et $R^{18}$ représentent chacun, indépendamment l'un de l'autre, un groupe alkyle en $C_1$-$C_6$ ou alcoxy en $C_1$-$C_4$ à chaîne droite ou ramifiée, un groupe phényle ou le chlore et s et t sont égaux chacun, indépendamment l'un de l'autre, à 0,1 ou 2.

**8.** Procédé selon l'une des revendications 1 ou 7, caractérisé en ce que l'on utilise en tant que milieu de réaction un mélange de plusieurs hydrocarbures aromatiques condensés.

**9.** Procédé selon la revendication 1, caractérisé en ce que l'on utilise l'hydrocarbure aromatique condensé en quantité de 50 à 1000 % en poids par rapport à la somme des poids des dérivés d'acides a-aminocarboxyliques, des isocyanates et des dérivés d'acides carboxyliques utilisés conjointement.